# FASCICULE DE BREVET EUROPEEN

(11) **EP 0 701 668 B1**
(45) Date de publication et mention de la délivrance du brevet: **15.12.1999**
(21) Numéro de dépôt: 95917391.5
(22) Date de dépôt: 13.04.1995
(51) Int. Cl.: F16F 15/12

(54) **VOLANT AMORTISSEUR, NOTAMMENT POUR VEHICULE AUTOMOBILE**
DÄMPFENDES SCHWUNGRAD, INSBESONDERE FÜR KRAFTFAHRZEUGE
FLYWHEEL, IN PARTICULAR FOR MOTOR VEHICLES

(30) Priorité: 14.04.1994 FR 9404439
(43) Date de publication de la demande: 20.03.1996
(73) Titulaire: VALEO, 75017 Paris (FR)
(72) Inventeur: MOKDAD, Ayman, F-93400 Saint-Ouen (FR); GRIECO, Giovanni, F-93400 Saint-Ouen (FR)
(74) Mandataire: Gamonal, Didier
(86) Numéro de dépôt international: FR9500482
(87) Numéro de publication internationale: WO9528580

(56) Documents cités:
- WO-A-95/20728
- DE-A- 4 341 373
- FR-A- 2 554 890
- FR-A- 2 579 709
- FR-A- 2 587 075
- FR-A- 2 631 409
- US-A- 1 984 577

## Description

La présente invention concerne les volants amortisseurs, notamment pour véhicule automobile, du genre comportant deux masses coaxiales montées mobiles l'une par rapport à l'autre, à l'encontre de moyens élastiques et de moyens de frottement.

Un tel volant amortisseur, appelé aussi double volant amortisseur, est décrit par exemple dans le document FR-A-2 565 650 (US-A-5 120 276).

Dans ce document le dispositif de frottement intervient entre la première masse (un plateau de celle-ci) destinée à être fixée à un arbre d'entraînement (le vilebrequin du moteur du véhicule), et un disque fixé sur la seconde masse comportant un plateau de réaction pour un embrayage à friction et ce à la périphérie interne du volant amortisseur.

Il en résulte qu'il faut usiner le plateau de la première masse à cet endroit.

En outre ce type de dispositif de frottement est bien adapté pour des moyens élastiques agissant circonférentiellement entre les deux masses.

Il n'est pas adapté à des volants amortisseurs dans lesquels les moyens élastiques agissent globalement radialement entre les deux masses.

Dans le document FR-A-2 631 409 les moyens de frottement interviennent de part et d'autre d'une pièce de rigidification.

D'une manière générale, il peut être souhaitable, quel que soit le type de moyens élastiques utilisés, de ne pas implanter ce dispositif de frottement au voisinage du plateau de la première masse.

Dans le document FR-A-2 587 075 , conforme au préambule de la revendication 1, une rondelle élastique d'étanchéité est implantée directement entre la deuxième masse et la pièce de rigidification en sorte que son implantation n'est pas aisée.

La présente invention a donc pour objet de créer un dispositif de frottement pouvant être utilisé avec n'importe quel type de moyens élastiques, tout en ne faisant pas appel au plateau de la première masse et en facilitant l'implantation de la rondelle élastique.

Suivant l'invention ce problème est résolu par la revendication 1.

Grâce à cette disposition, l'espace existant, entre cette pièce et le plateau de la première masse, peut être mis à profit pour monter des moyens élastiques agissant globalement radialement entre les deux masses ou circonférentiellement entre celles-ci.

Ainsi on peut fixer aisément la première masse sur le vilebrequin du moteur, notamment quand le palier intervenant entre les deux masses est de taille réduite, son diamètre externe étant inférieur à celui des trous de fixation.

On peut utiliser cette pièce pour monter des moyens élastiques à action circonférentielle.

On appréciera que cette pièce rigidifie la première masse qui porte usuellement en porte-à-faux à cet endroit une jupe globalement d'orientation axiale.

Les moyens de frottement participent à la rigidification de la première masse car ils forment globalement une cale intervenant entre la seconde masse et la pièce de rigidification.

Lorsque ces moyens de frottement interviennent à la périphérie externe cela permet d'augmenter le couple de frottement.

Lorsque ces moyens interviennent à la périphérie interne on peut augmenter l'inertie de la seconde masse.

Avantageusement ce rebord présente des échancrures formant des mortaises.

Ceci permet d'implanter entre les pattes et la partie transversale de cette pièce au moins une rondelle de frottement et la rondelle élastique à action axiale. La rondelle de frottement est alors admise à être calée, éventuellement avec jeu, en rotation sur la seconde masse, tandis que la rondelle élastique à action axiale prend appui directement ou indirectement sur les pattes de la pièce de rigidification pour action sur une rondelle d'application dotée de tenons engrenant avec les mortaises du rebord axial de la pièce de rigification.

Ainsi la rondelle de frottement est serrée entre la partie transversale de la pièce et la rondelle d'application et on obtient un ensemble imperdable, manipulable et transportable comprenant la pièce de rigidification selon l'invention et les rondelles précitées.

La seconde masse présente alors des moyens d'engrènement pour engrener avec la rondelle de frottement et ce éventuellement avec jeu.

La description qui va suivre illustre l'invention en regard des dessins annexés dans lesquels :
- la figure 1 est une vue en coupe axiale d'un embrayage à friction équipé d'un plateau de réaction selon l'invention et ce selon la ligne 1-1 de la figure 2 ;
- la figure 2 est une vue de face de l'embrayage à friction sans ses plateaux de réaction et de pression et son disque de friction avec arrachement local ;
- la figure 3 est une vue en coupe selon la ligne 3-3 de la figure 2 ;
- la figure 4 est une vue à plus grande échelle de la partie basse de la figure 1 ;
- la figure 5 est une vue analogue à la figure 1 pour un deuxième exemple de réalisation ;
- la figure 6 est une vue partielle selon la flèche 6 de la figure 5, le plateau de réaction 21 ayant été oté ;
- la figure 7 est une vue a plus grande échelle de la partie basse de la figure 5 ;
- la figure 8 est une vue en coupe axiale pour un troisième exemple de réalisation ;
- la figure 9 est une vue de face d'une cassette articulée pour un autre exemple de réalisation ;
- la figure 10 est une vue en coupe selon la ligne 10-10 de la figure 9 ;
- la figure 11 est une demi-vue en coupe analogue à la figure 10 pour un autre exemple de réalisation ;
- la figure 12 est une vue en coupe partielle pour une autre variante des moyens d'articulation ;
- la figure 13 est une vue analogue à la figure 12 pour encore un autre exemple de réalisation ;
- la figure 14 est une vue partielle pour encore une autre variante des moyens d'articulation ;
- la figure 15 est une demi-vue analogue à la figure 5 avec le reste de l'embrayage.

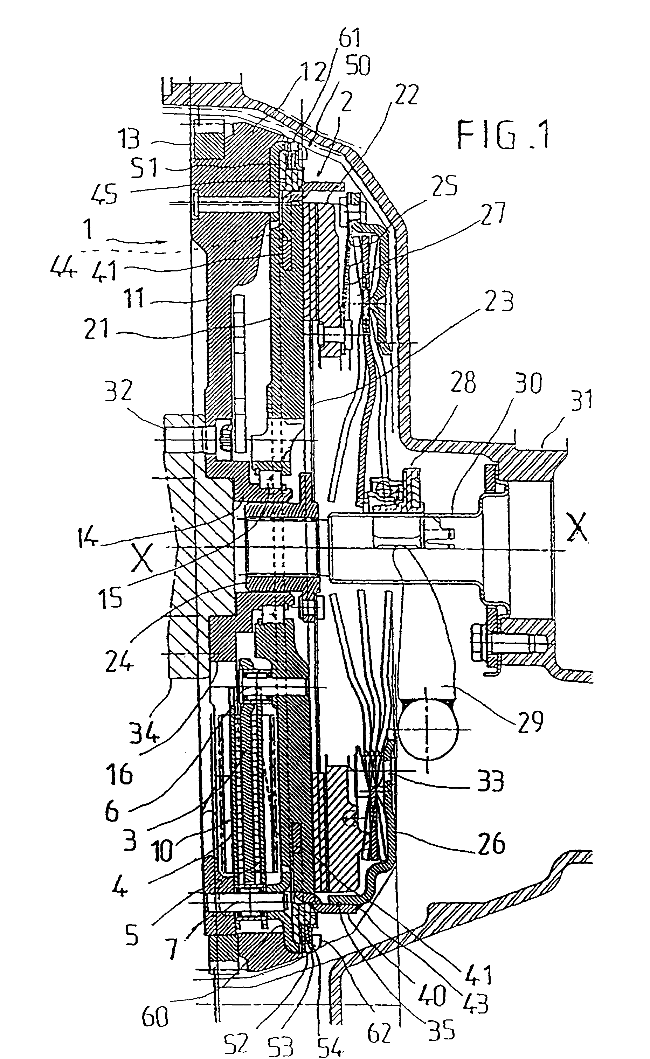

Dans les figures 1 à 3 est illustré un dispositif amortisseur de torsion comportant deux parties coaxiales 1,2 montées mobiles l'une par rapport à l'autre à l'encontre de moyens élastiques 8 appartenant à un dispositif élastique d'amortissement.

Ce dispositif appartient à un volant amortisseur pour véhicule automobile.

La première partie 1 consiste en un plateau 11 et la seconde partie 2 consiste également en un plateau 21 s'étendant parallèlement au plateau 11. Les plateaux 11 et 21 sont en matière moulable, usuellement en fonte, pour augmenter leur inertie. En variante ils peuvent être à base d'aluminium, le choix de la matière dépendant des applications.

En règle générale, de manière connue en soi, le métal en fusion est versé dans un moule.

Les deux parties 1,2 consistent donc en des masses coaxiales tournantes l'une par rapport à l'autre autour de l'axe de symétrie axial X-X de l'embrayage.

La seconde masse 2 est montée à rotation sur un moyeu tubulaire 14 porté par la première masse 11. Ici le moyeu 14 est d'un seul tenant avec le plateau 11, en variante il peut être rapporté sur celui-ci, et un palier 15, ici un roulement à billes en variante un palier lisse, est interposé entre la périphérie externe du moyeu 14 et la périphérie interne du plateau 21.

La seconde masse 2, montée tournante sur la masse 1 par l'intermédiaire du palier 15, constitue le plateau de réaction d'un embrayage à friction comportant, de manière connue en soi, un plateau de pression 22, un diaphragme 25 et un couvercle 26.

Par rapport à une solution classique avec un volant moteur formant le plateau de réaction de l'embrayage, on divise ici le volant en deux parties comme explicité ci-après.

Le plateau de réaction 21 en matière moulable comporte un insert de fixation 40,41 ancré dans la masse dudit plateau 21 en étant noyé dans celui-ci. Ledit insert 40,41 présente en saillie, au voisinage de la périphérie externe du plateau de réaction 21, une zone de fixation 40 pour fixation du couvercle 26 de l'embrayage à friction et formation d'un dispositif de frottement suivant une caractéristique de l'invention.

Ici le plateau de pression 22, usuellement en fonte, est lié en rotation au couvercle 26 avec mobilité axiale, de manière connue en soi, par l'intermédiaire de languettes élastiques inclinées 27 fixées chacune à l'une de leur extrémité au couvercle 26 et à l'autre de leur extrémité à une patte du plateau de pression 22.

La fixation est réalisée ici par rivetage.

Le diaphragme 25 est monté de manière basculante sur le couvercle 26, ici par l'intermédiaire de colonnettes 33, dont l'une est visible dans la partie basse de la figure 1. Cette colonnette présente une tête pour appui du diaphragme en regard d'un embouti formé dans le fond du couvercle.

Pour plus de précisions on se reportera au document FR-A-1 524 350 (US-A-3,499,512).

En variante on peut utiliser une articulation avec deux joncs portés par les colonnettes ou des dispositions avec des rondelles portées par des pattes issues du couvercle par pliage et découpe.

Le diaphragme 25 prend appui sur le fond du couvercle 26 pour solliciter le plateau de pression 22 en direction du plateau de réaction 21. L'embrayage à friction comporte également un disque de friction 23, qui est relié à un moyeu central 24 calé en rotation sur l'arbre d'entrée de la boîte vitesses (non visible) par un montage à cannelures.

Pour mémoire on rappellera que l'ensemble des pièces 26,25,24,27 forme un mécanisme d'embrayage unitaire fixé par son couvercle 26, de forme creuse, sur le plateau de réaction 21 grâce aux inserts 40,41 selon l'invention.

Normalement les garnitures de frottement, que présente le disque 23 à sa périphérie externe, sont serrées sous l'action du diaphragme entre les plateaux 21,22 en sorte que l'embrayage est normalement engagé.

Pour débrayer, l'embrayage étant ici du type poussé, il faut agir en poussant sur les extrémités des doigts du diaphragme 25 à l'aide d'une butée de débrayage 28 pour désengager l'embrayage.

Pour ce faire la butée 28 est montée mobile axialement le long d'un tube-guide 30 solidaire de la boîte de vitesses 31 et traversé par l'arbre d'entrée de celle-ci.

Cette butée 28 est commandée par une fourchette de débrayage 29 permettant son déplacement axial vers la gauche de la figure 1 entraînant ainsi un basculement du diaphragme dont plusieurs positions sont représentées à la figure 1.

La première masse tournante 11 est prévue pour être reliée, ici par des vis 32, par sa périphérie interne à un arbre menant, ici au vilebrequin 34 du moteur à combustion interne du véhicule automobile, tandis que la seconde masse tournante 2 est liée en rotation par l'intermédiaire du mécanisme d'embrayage 22,25,26,27 et du disque 23 à un arbre mené, ici l'arbre d'entrée de la boîte de vitesses du véhicule.

La première masse 1, formant plateau, est constituée dans l'essentiel par une partie centrale 11, d'orientation transversale, en forme de plaque ou de flasque, qui se prolonge d'un seul tenant à sa périphérie externe par une jupe cylindrique d'orientation axiale 12.

Cette masse 1 porte à sa périphérie externe une couronne de démarrage 13 prévue pour être entraînée par le pignon d'un démarreur (non représenté).

La partie interne de la masse 1 est dotée d'une pluralité de trous pour passage des vis de fixation 32 de la masse 1 au vilebrequin 34.

On notera que le plateau de réaction 21 présente des trous en correspondance permettant le passage d'un outil pour le vissage des vis 32 et que le roulement 15 s'étend en-dessous des vis 32 et desdits trous en étant de taille réduite.

Ici l'insert 40,41 est métallique en étant en tôle emboutie.

Cet insert comporte une partie transversale 41 noyée et donc enracinée de manière ferme dans la partie principale transversale du plateau de réaction 21.

Cette partie 41 est dotée d'une pluralité de trous 44 pour parfaire l'enracinement.

A sa périphérie externe cette partie transversale 41 est prolongée, en direction du fond du couvercle 26, par une partie cylindrique 40 d'orientation axiale, éventuellement fractionnée en pattes, qui forme la zone de fixation. La partie 40 s'étend en saillie axiale par rapport à la face de friction du plateau de réaction en s'étendant radialement au-delà de la périphérie externe du plateau 21 (au voisinage de celle-ci) et donc à distance des garnitures de frottement du disque 23 et du plateau de pression 22 qu'elles entourent. La face de friction, qu'offre le plateau 21 aux garnitures de frottement du disque 23, peut donc s'étendre jusqu'à la tranche externe du plateau 21. Le couvercle 26, ici en tôle emboutie, présente à sa périphérie externe un rebord d'orientation axiale 35 ici fractionné.

Ce rebord est cylindrique et est propre à coopérer à glissement avec la périphérie interne de la partie 40 formant centreur.

Le rebord 35 est ainsi interposé entre la partie 40 et la périphérie externe du plateau de pression 22. Ce rebord 35 est en contact intime avec la partie 40.

Il est donc possible d'engager plus ou moins de manière télescopique le couvercle 26 dans la partie 40.

Bien entendu on peut inverser les structures, le rebord entourant alors la partie 40 en coopérant avec la périphérie externe de celle-ci. Dans tous les cas, la partie 40 forme un organe de guidage et de centrage pour le rebord 35 et donc pour le couvercle 26.

Ainsi on peut contrôler de manière précise l'inclinaison et/ou la charge du diaphragme 25 et ce par rapport à une référence en l'occurrence le vilebrequin 34 du moteur du véhicule.

Dès que le diaphragme a atteint l'inclinaison ou la charge souhaitée, on procède alors à une fixation du couvercle ici sur l'extrémité libre de la zone de fixation 40 de l'insert, ici par soudage, avec formation d'un cordon 43.

Lorsque le rebord 35 entoure la partie 40, le soudage est réalisé au niveau de l'extrémité libre du rebord. En variante on peut procéder à un collage.

Ici les moyens élastiques du dispositif élastique d'amortissement comportent au moins un organe élastique 8 et interviennent globalement radialement entre les plateaux 11 et 21.

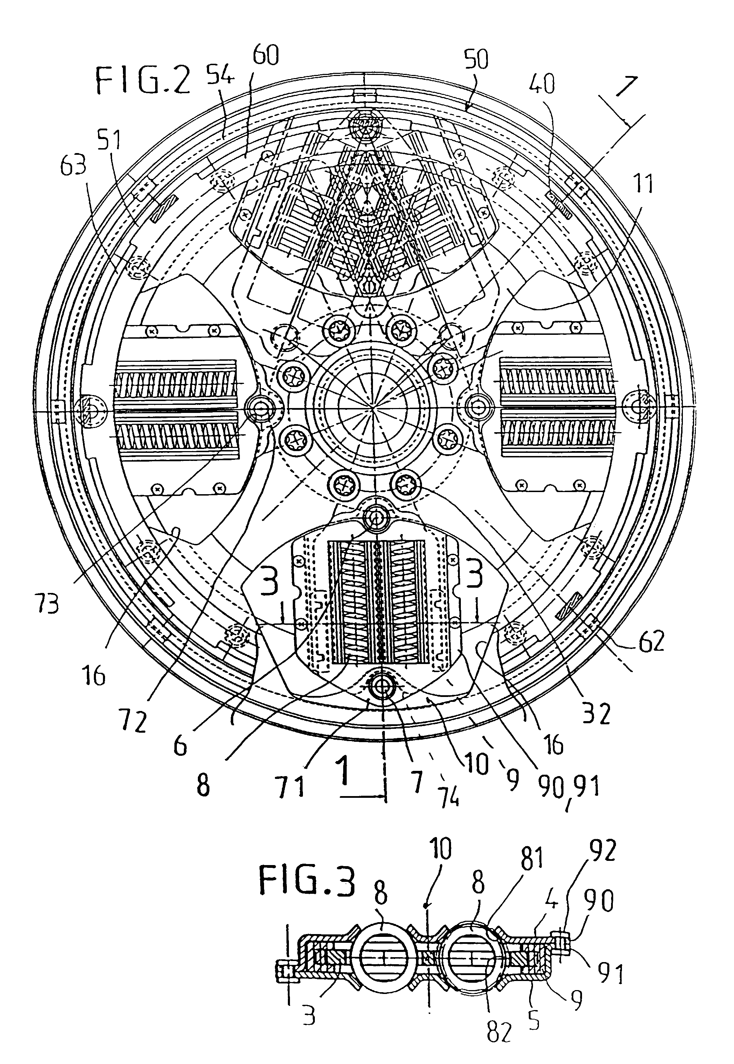

Ici des organes élastiques sont montés dans au moins une cassette 10 articulée (figures 2 et 3) comportant, d'une part, un voile 3 doté de premiers logements 82 pour montage des organes élastiques 8 et, d'autre part, deux pièces de guidage 4,5 disposées de part et d'autre dudit voile et présentant, en regard du premier logement 82, des seconds logements 81 pour montage desdits organes élastiques 8, consistant ici en deux ressorts à boudin, éventuellement montés par paire dans les logements 81,82.

Ici deux logements 81,82 parallèles entre eux sont donc prévus. Bien entendu on peut prévoir un seul ressort par cassette et donc un seul logement 81.

En variante on peut prévoir un nombre plus élevé de logements 81,82 et donc de ressorts 8 par cassette.

Les pièces de guidage 4,5 sont fixées latéralement l'une à l'autre. Le voile 3 et les pièces de guidage 4,5 sont montés tête-bêche, ledit voile présentant à l'une de ses périphéries externe et interne une première probutérance 72 pour montage de premiers moyens d'articulation 6 sur une première desdites masses 11,12, tandis que les pièces de guidage 4,5 présentent à l'une de leur périphérie externe et interne une seconde protubérance 71, en regard l'une de l'autre, pour montage de seconds moyens d'articulation 7, sur l'autre desdites masses.

Lesdites seconde 71 et première protubérances 72 sont décalées radialement l'une par rapport à l'autre.

Ici les premier 82 et second logements 81 consistent en des fenêtres d'orientation radiale, les second logements 81 présentant des lèvres.

En variante le premier logement peut consister en une échancrure d'orientation radiale ouverte radialement du côté opposé à la première protubérance.

En variante les second logements 81 peuvent consister en des emboutis.

Quoi qu'il en soit, les pièces de guidage 4,5 présentent à leur périphérie externe des rebords 90,91 pour leur fixation mutuelle ici à l'aide de rivets 92.

Ces pièces de guidage 4,5 sont donc fixées latéralement l'une à l'autre par rivetage.

En variante elles peuvent être fixées l'une à l'autre à la faveur de leurs rebords par soudage ou agrafage.

Ici deux ressorts à boudin 8 sont montés parallèlement l'un à l'autre à l'intérieur de ladite cassette et le voile 3 est monté à articulation à sa périphérie interne sur le plateau 21, tandis que les pièces de guidage 4,5 sont montées à articulation à leur périphérie externe sur le plateau 11. Les pièces 4,5 présentent chacune au niveau des protubérances 72 un évidement 73, ici semi-circulaire, pour passage d'un axe 6, décrit ci-après, ce qui permet d'allonger les ressorts 8.

Il en est de même du voile 3 qui présente au niveau des protubérances 71 un évidement 74, ici semi-circulaire, pour passage d'un axe 7 décrit ci-après.

Les ressorts 8 ont donc une longueur maximale.

Plus précisément le voile 3 est monté à articulation sur le plateau 21 (à la périphérie interne de celui-ci) à l'aide d'un axe 6 à tête épaulée fixé, ici par emmanchement à force, sur le plateau 21 et entouré par un palier à aiguilles 171 interposé entre ledit axe et une douille (ou manchon) 170 fixée sur le voile 3.

En variante on peut utiliser un palier lisse.

Cette douille 170 s'étend axialement entre les plateaux 11 et 21 en étant fixée ici par soudage sur le voile 3.

A leur périphérie externe les pièces 4,5 sont montées à articulation à l'aide d'un axe 7 emmanché à force dans le plateau 11 et dans une pièce 60 et ce à la périphérie externe du plateau 21.

L'axe 7, comme l'axe 6; est entouré par un roulement à aiguilles interposé entre ledit axe et un manchon solidaire des pièces de guidage 3,4, ici par soudage.

Le manchon et le roulement à aiguilles sont interposés axialement entre le plateau 11 et la pièce 60 présentant une cheminée pour réception de l'axe 7.

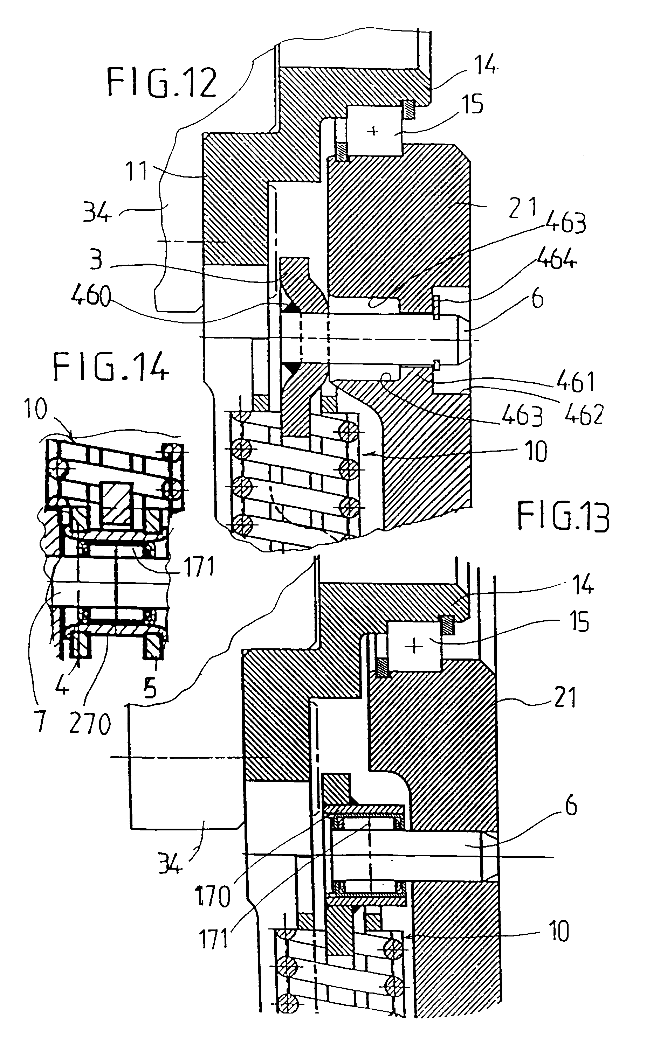

En variante (figure 14) le manchon 270 peut être rapporté par sertissage sur les pièces 4,5. Pour ce faire le manchon présente une partie centrale de plus grand diamètre s'étendant entre les deux pièces 4,5 et offrant à celles-ci un épaulement. Les extrémités du manchon sont rabattues pour sa fixation ou par sertissage aux pièces 4,5. Ce manchon 270 est monté sur le roulement à aiguilles 171.

Le plateau 11 est évidé en 16 en regard de chaque cassette 10 pour réduction de l'encombrement axial et favoriser la ventilation. Le bord intérieur (figure 2) de l'évidement 16 est de forme circulaire pour permettre un mouvement des cassettes 10.

Ici le dispositif élastique d'amortissement comporte quatre cassettes articulées 10 et quatre axes 6,7, régulièrement répartis sont prévus comme illustré à la figure 2. Bien entendu ce nombre dépend des applications.

La pièce 60, dont la partie transversale est d'orientation transversale, est fixée ici par rivetage à la périphérie externe du plateau 11, plus précisément sur la partie 12 de celui-ci. Cette pièce 60 est d'orientation transversale.

Cette pièce 60, ici en tôle, permet donc de rigidifier le plateau 11 ajouré par les ouvertures 16. Cette pièce 60 délimite avec le plateau 11 une chape pour le montage des axes 7. Par commodité elle sera dénommée pièce de rigidification.

Suivant l'invention la pièce 60 présente à sa périphérie externe, dans une première forme de réalisation, un rebord d'orientation axiale avec des échancrures 61 formant des mortaises et des pattes 62 à son extrémité libre. Les pattes 62 sont rabattues radialement vers l'axe de l'ensemble.

La pièce 60 s'étend à proximité de la première masse et a donc une forme de peigne avant pliage des pattes 62.

Entre la périphérie externe de la partie transversale de la pièce 60 et les pattes 62, on trouve successivement axialement une rondelle de frottement 51, une rondelle d'application 52, une rondelle élastique à action axiale 53, ici une rondelle Belleville en variante un diaphragme ou une rondelle ondulée, et enfin une pièce d'appui 54 au contact avec les pattes 62.

La rondelle d'application 52 présente à sa périphérie externe des pattes radiales, formant des tenons, engagées dans les échancrures 61 de la pièce 60. La rondelle 52 est ainsi liée en rotation, éventuellement avec jeu, avec la pièce 60 par une liaison du type tenons-mortaises.

La pièce 51 est en matériau de frottement et a globalement en section la forme d'un L inversé. Elle est avantageusement en matière moulable par exemple en matière plastique.

Localement à sa périphérie interne la pièce 51 présente des bossages 63 engagés, avec ou sans jeu circonférentiel, dans des emboutis 45 locaux pratiqués dans la zone de raccordement de la zone de fixation 40 avec la zone 41 d'enracinement de l'insert de fixation 40,41.

Les emboutis 45 sont dirigés vers l'axe de l'ensemble en étant au contact de la périphérie externe du plateau de réaction 2. Pour cette raison les bossages 63 sont chanfreinés.

Ainsi, grâce à la pièce 60 et à l'insert de fixation 40,41, il est créé suivant l'invention un dispositif d'hystérésis 50 intervenant entre les pièces 40,41 - 60, ledit dispositif comprenant, d'une part, les rondelles 52,53,54 calées en rotation par l'intermédiaire de la pièce 52 sur la pièce 60, et d'autre part, la pièce de frottement 51 calée en rotation, éventuellement à jeu, sur la pièce 40 et donc sur le plateau 21. Le dispositif 50 forme donc des moyens de frottement à action axiale intervenant entre les deux masses 1,2 à la faveur, selon l'invention de la pièce 60 et du plateau de réaction 21.

Ce dispositif favorise l'augmentation de l'inertie du volant amortisseur, car il intervient à la périphérie externe des deux masses 1,2 en laissant intact l'espace axial entre les deux plateaux 11 et 21. Ainsi il est possible d'utiliser un palier 15 de taille réduite et de visser les vis 32.

Lors du mouvement relatif entre les deux masses 1,2, les ressorts 8, et donc les cassettes 10 s'inclinent comme représenté dans la partie haute de la figure 2 avec un mouvement relatif entre les pièces 51 et 60 engendrant un frottement.

Comme mieux visible à la figure 3, le plateau de réaction 21 est d'épaisseur réduite à sa périphérie externe pour logement de la pièce 60. Sa face avant, tournée vers le plateau 11, est donc rognée.

Suivant une caractéristique la périphérie externe de la pièce 60 et les rondelles 51,52,53,54 s'étendent dans l'épaisseur du plateau 61.

Les deux masses 1,2 concentriques sont donc montées mobiles l'une par rapport à l'autre à l'encontre de moyens élastiques 8 à action radiale et de moyens de frottement 50 à action axiale.

Lors de l'opération de débrayage la rondelle 53 agit à l'encontre de la force de débrayage et soulage ainsi le palier.

On notera également que deux patins de frottement 9 interviennent entre les bords latéraux du voile 3 et les bords latéraux des pièces de guidage 4,5.

Ces patins 9 comportent des bossages engagés dans des échancrures pratiquées dans les bords latéraux du voile 3. Les patins 9 coiffent la tranche du voile 3.

Ainsi un frottement supplémentaire intervient lors du mouvement relatif entre les deux masses 1,2, les patins guidant le voile 3 lors de son mouvement relatif par rapport aux pièces 4,5. Tout risque de coincement est ainsi évité.

On notera que l'insert 40,41 présente donc une zone d'enracinement 41, d'orientation transversale, noyée dans le plateau 21 et une zone de fixation 40, d'orientation axiale, permettant la création d'un dispositif de frottement ainsi que la fixation, ici de manière réglable du couvercle 26.

Grâce à l'insert 41 et à sa zone 40 on réduit l'encombrement du volant amortisseur à cet endroit, ce qui permet d'implanter le dispositif de frottement 50 sans interférence avec le carter de l'embrayage.

Dans ces figures 1 à 4, la pièce de rigidification 60 porte à sa périphérie externe les rondelles 51,52,53,54 du dispositif de frottement 50 implanté radialement entre son rebord périphérique externe d'orientation axiale et la tranche de la périphérie externe du plateau de réaction 21. Ce dispositif s'étend radialement au-dessus de la face de fixation du plateau de réaction 21 pour les garnitures de frottement du disque de friction 23.

Bien entendu on peut inverser les structures.

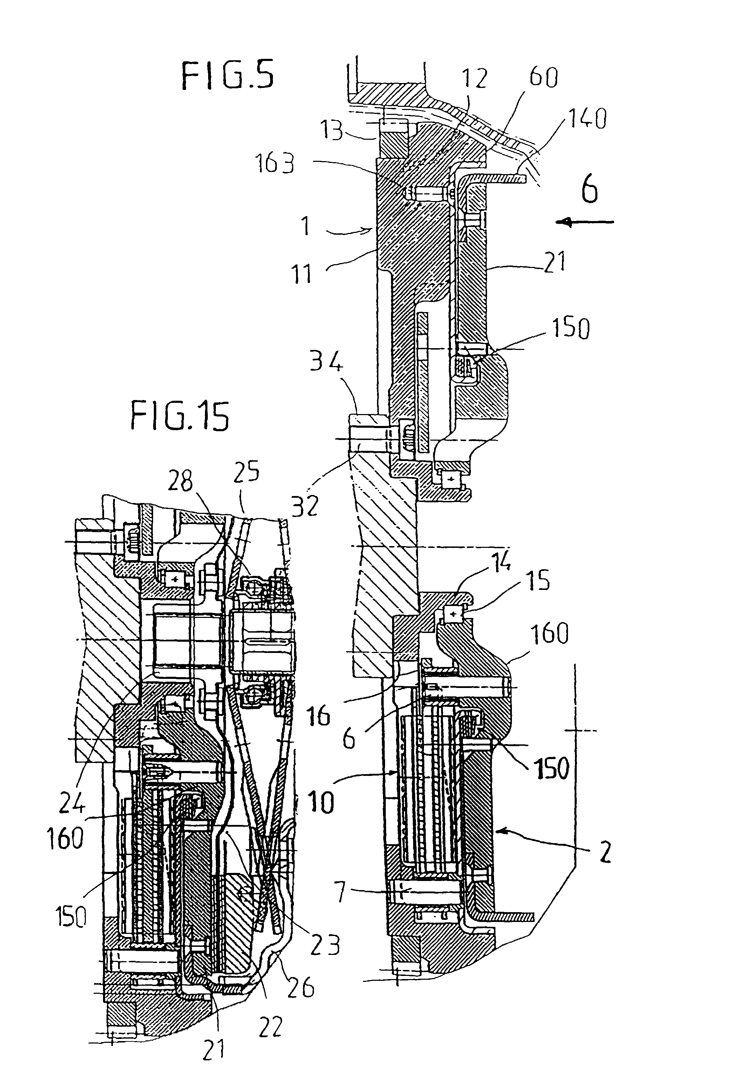

Ainsi à la figure 5 le dispositif de frottement 150 est implanté au niveau de la périphérie interne de la pièce de rigidification 60 fixée ici par des vis 163 sur la jupe 12 du plateau 11.

Pour ce faire le plateau 21 présente à sa périphérie interne une protubérance 160 dirigée axialement en direction opposée au plateau 11.

Les moyens d'articulation 6 sont montés à la faveur de cette protubérance 160.

Ces moyens d'articulation 6, comme précédemment, comportent un manchon fixé par soudage sur le voile 3 en s'étendant en direction axiale vers la protubérance 160.

Grâce à cette protubérance il est possible de rallonger ce manchon.

Ici un palier lisse est interposé entre le manchon et l'axe d'articulation proprement dit.

La pièce de rigidification 60 présente à sa périphérie externe un rebord d'orientation axiale épousant la forme de la jupe 12.

Dans les figures 3 7 et 8, on notera que la pièce 60 est fixée sur la face externe de la jupe 12, tournée à l'opposé du plateau 11, et que la pièce 60 épouse ladite face de la jupe, qui en variante peut être rapportée sur le plateau 11, les rivets de la figure 1 servant alors à assembler ladite jupe et ladite pièce 60 au plateau 11.

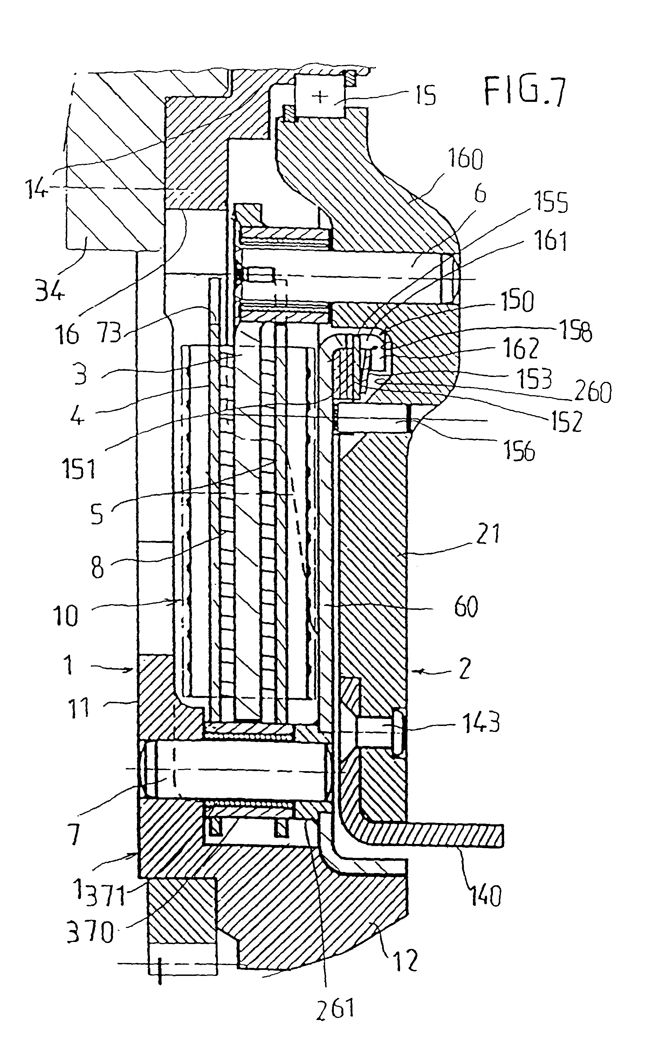

A sa périphérie interne cette pièce 60 (figure 7) présente un rebord d'orientation axiale dirigé en direction opposée au plateau 11.

Ce rebord présente des échancrures 161 formant mortaises et à son extrémité libre des pattes 162, initialement dans l'alignement de ce rebord.

Ces pattes sont destinées à être repliées ici radialement en direction opposée à l'axe de l'ensemble.

Pour ce faire, comme visible à la figure 7, de manière sombre, des saignées sont prévues pour faciliter le pliage des pattes 162. Il en est de même à la figure 3.

Entre la périphérie interne de la partie transversale de la pièce 60 et les pattes 162, on trouve successivement axialement une rondelle de frottement 151, une rondelle d'application 152 et une rondelle élastique à action axiale 153, ici une rondelle Belleville, prenant appui directement sur les pattes 162 pour action sur la rondelle d'application 152 et serrage, comme à la figure 3, de la rondelle de frottement 151 entre la rondelle d'application 152 et la pièce 60.

Cette pièce d'application 152 présente à sa périphérie interne des pattes 155 formant des tenons engagés, éventuellement à jeu circonférentiel dans les mortaises 161.

A sa périphérie externe la rondelle 151, avantageusement en matière moulable telle que de la matière plastique, présente des échancrures 157 propres à engrener ici à jeu avec des pions 156 portés par le plateau de réaction 21.

En variante les échancrures engrènent sans jeu avec les pions 156.

Ces pions s'étendent radialement en-dessous de la face de friction du plateau de réaction 21 pour les garnitures de frottement du disque de friction 23 du plateau de réaction 21 présentant à sa périphérie externe une pièce de fixation annulaire 140 à section en forme d'équerre fixée par des rivets 143 au plateau de réaction 21.

Pour ce faire la face du plateau de réaction 21, tournée vers le plateau 11 est creusé pour logement de la partie transversale de la pièce 140, dont la partie axiale 140 sert à la fixation du couvercle de la figure 1, le reste de l'embrayage n'ayant pas été représenté par simplicité. On notera néanmoins que le disque 23 est galbé pour épouser la forme de la protubérance et la contourner comme visible à la figure 15 dans laquelle on voit l'embrayage.

Le dispositif d'hystérésis 150 s'étend donc radialement en-dessous de la face de friction (figure 15) et pour ce faire le plateau de réaction 121 est creusé en 158,260 pour logement des rondelles 151,152,153 et des pattes 162.

Il est ainsi créé un évidement annulaire avec un fond 158 s'étendant globalement transversalement et un bord incliné 260 dirigé vers le plateau 11.

Intérieurement l'évidement de logement du dispositif de frottement 150 est délimité par un rebord d'orientation axiale. Cet évidement ou creusure est formé à la faveur de la protubérance 160 sur la face du plateau 21 dirigée vers le plateau 11.

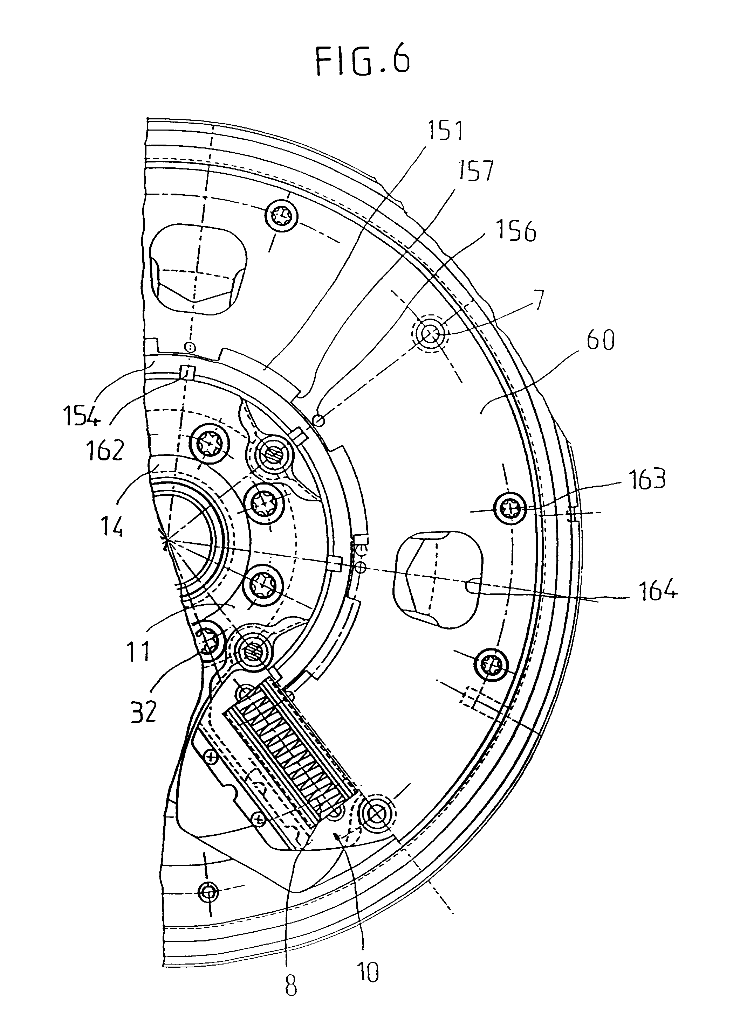

La pièce de rigidification 60 permet le vissage des vis 32 et présente des ouvertures 164 (figure 6) pour faciliter la ventilation.

On appréciera, par rapport au mode de réalisation de la figure 1, que l'on peut augmenter la taille radiale du plateau de réaction 21 et donc l'inertie.

Les moyens d'articulation 7 comprennent un axe emmanché dans le plateau 11 et dans une douille 261 rapportée par soudage sur la pièce 60.

Ces moyens d'articulation comportent par ailleurs un manchon 370 formant entretoise entre la douille 261 et le plateau 11, ce manchon 370 est monté dans des ouvertures correspondantes prévues dans les pièces de guidage 4 et 5.

Un palier lisse 371 est interposé radialement entre le manchon 370 solidaire des pièces 4 et 5.

Dans les deux cas, la pièce 60 globalement d'orientation transversale s'étend au voisinage du plateau 21 et a une double fonction à savoir, d'une part, une fonction de frottement pour le dispositif 50,150, et, d'autre part, une fonction de support pour les moyens d'articulation 7 implantés dans les deux cas à la périphérie externe de ladite pièce 60. Dans tous les cas elle rigidifie la masse 1 et délimité une chape avec le plateau 11 pour montage des axes 7.

Bien entendu les moyens élastiques 8 peuvent être à action circonférentielle et comporter des organes élastiques intervenant circonférentiellement entre les deux masses 1,2.

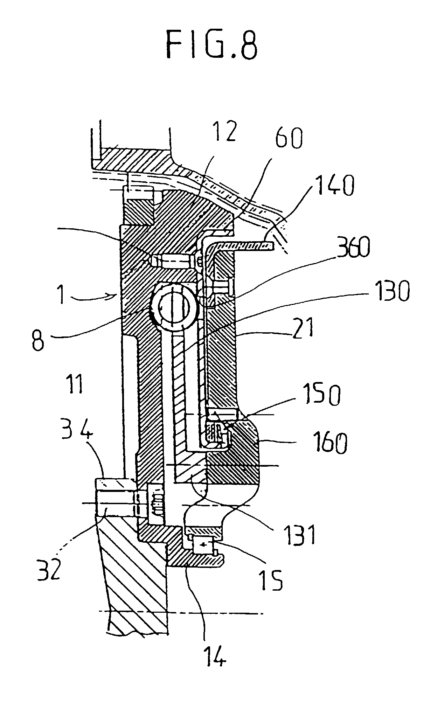

Ainsi dans la figure 8, la pièce 60 présente des fenêtres 360 pour montage d'organes élastiques 8 à action circonférentielle, dont les extrémités s'appuient sur les bords desdites fenêtres et sur des épaulements formés dans la masse 1, à la faveur de creusures formées dans celles-ci.

Un voile 130, d'orientation transversale, est implanté axialement entre le plateau 11 et la pièce 60 portant à sa périphérie interne, comme à la figure 7, les rondelles du dispositif de frottement 150, le plateau de réaction 21 présentant comme précédemment la protubérance 160 pour montage du dispositif de frottement 150.

Le voile 130 a une section globalement en forme d'équerre et présente à sa périphérie interne un rebord 131 dirigé axialement vers le plateau 21.

C'est par ce rebord 131 que le voile 130 est fixé, par exemple par rivetage ou vissage sur la protubérance 160.

Ce voile présente, de manière connue en soi, à sa périphérie externe des pattes propres à agir sur les ressorts 8, ici du type ressorts à boudin.

Ainsi la masse 1 est accouplée élastiquement à la masse 2 par l'intermédiaire des ressorts 8 et du voile 130.

La partie axiale 131 de ce voile est implantée radialement entre le dispositif de frottement et les trous de passage, que présente le plateau 21 pour vissage des vis 32.

Ainsi dans tous les cas (figures 1 à 8) on peut visser aisément les vis 32, car le dispositif d'hystérésis 50,150 n'intervient pas axialement à ce niveau.

Il est également possible de monter des moyens élastiques intervenant circonférentiellement ou radialement du fait que la pièce 60 s'étend axialement à distance du plateau 11.

Bien entendu la présente invention n'est pas limitée à l'exemple de réalisation décrit.

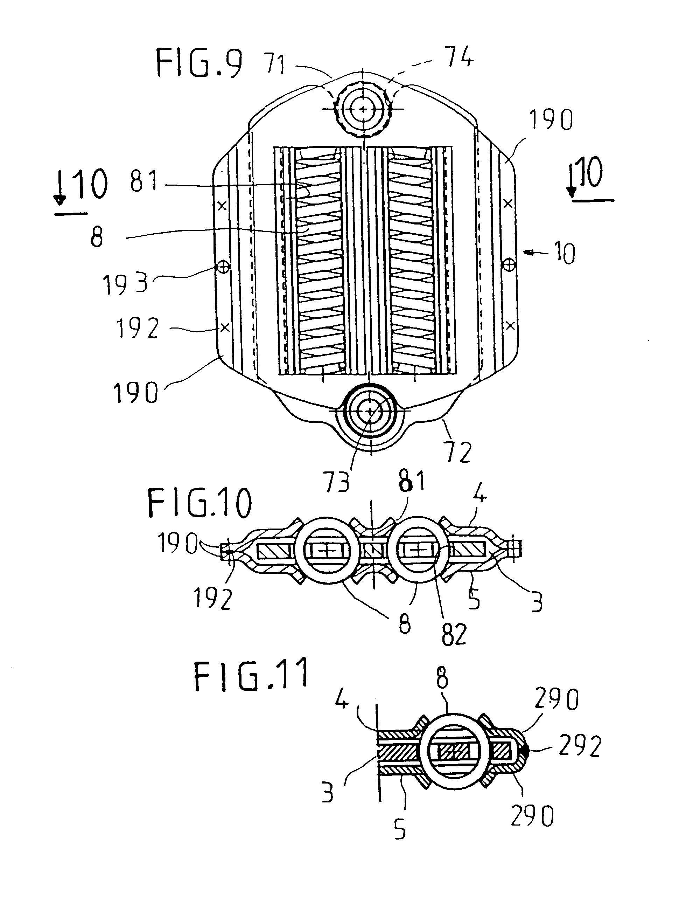

Ainsi dans les figures 9 et 10, les pièces de guidage 4 et 5 présentent des bords latéraux identiques 190 fixés par soudage, par points référencés en 192, des pions de centrage 193 intervenant entre les deux rebords 190.

Bien entendu ces rebords peuvent être de forme semi-circulaire comme visible à la figure 11 en 290 en étant soudés comme visible en 292.

Les premiers moyens d'articulation peuvent comporter (figure 12) un axe 6 soudé en 460 sur le voile 3 et monté à articulation sur le plateau 21 à la faveur d'une paroi transversale 461 formée dans l'épaisseur du plateau 21 à la faveur de passages 462,463 communiquant prévus dans ledit plateau 21.

L'axe 6 est donc monté tourillonnant dans l'alésage de la paroi 461.

Une rondelle fendue du type circlips 464 est montée dans une rainure de l'axe 6 pour calage axial dudit axe.

Bien entendu (figure 13) le voile 3 peut ne pas être déformé à sa périphérie interne pour porter le manchon 170 entourant le roulement à aiguilles 171.

Bien entendu l'embrayage peut être du type tiré comme décrit dans le document FR-A-2 463 874 (US-A-4,362,230).

Le couvercle peut être en matière plastique renforcée par des fibres, par exemple de verre.

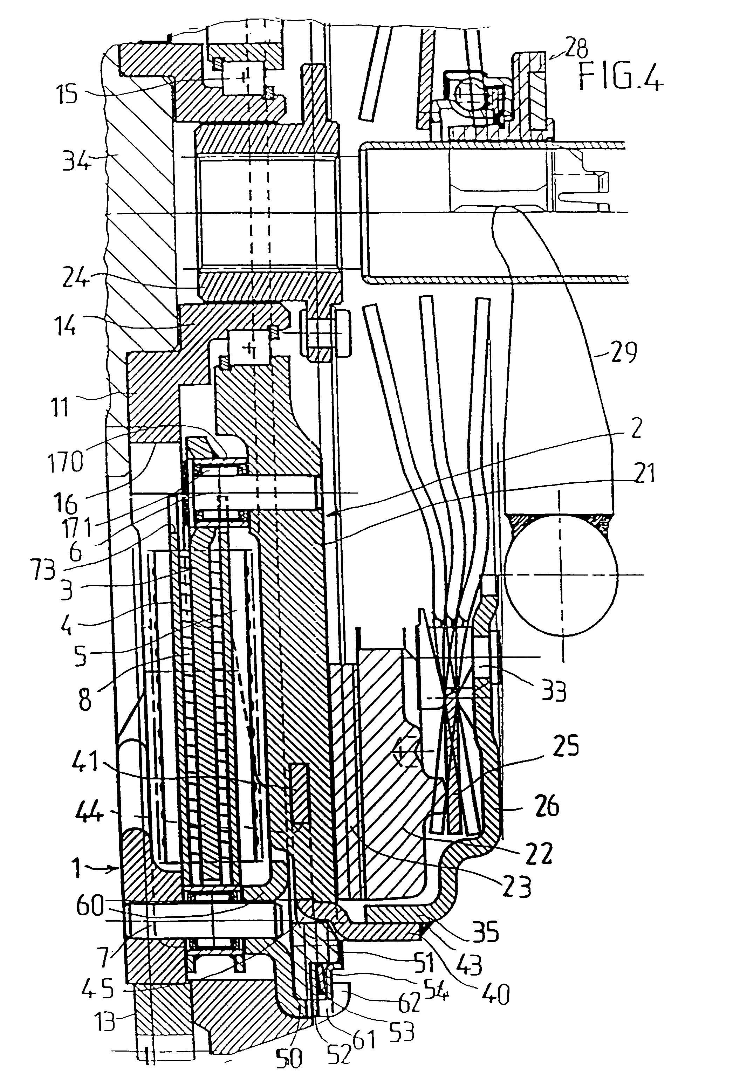

En variante les colonnettes 33 et le diaphragme 25 peuvent être montés à l'extérieur du couvercle comme à la figure 4 du document FR-A-1 524 350.

Dans ce cas les bossages, qu'offre le plateau de pression 22 pour l'appui du diaphragme 25, traversent le couvercle fixé par exemple comme à la figure 7 par soudage sur l'insert.

On appréciera que le roulement 15 est de taille réduite et qu'il s'étend en-dessous des vis 32 ce qui permet d'allonger les ressorts 8 et donc les cassettes 10.

Dans les figures illustrées, pour la position de repos du volant amortisseur, les cassettes 10 s'étendent radialement, les moyens d'articulation 6,7 étant alors alignés sur un même axe.

En variante pour ladite position de repos, les cassettes 10 peuvent être légèrement inclinées, les moyens d'articulation 6,7 étant alors décalés circonférentiellement.

Bien entendu on peut inverser les structures, les pièces 4,5 étant articulées à leur périphérie interne sur le plateau de réaction 21, tandis que le voile 3 est alors articulé à sa périphérie externe sur le plateau 11 avec intervention de la pièce 60.

Le palier 15 peut être interposé radialement entre un rebord d'orientation axiale que présente alors le plateau 21 à sa périphérie interne et le moyeu 14. Ainsi la bague externe du roulement 15 est au contact du moyeu 14, tandis que la bague interne du roulement 15 est au contact du plateau 21.

Les trous fermés 44 peuvent être remplacés par des emboutis ou des crevés, ou des pattes, de préférence alternés.

Par exemple, à la figure 1, la partie d'enracinement 41 présenterait alors avantageusement une première série d'emboutis dirigés vers le plateau 11, et une seconde série d'emboutis dirigés axialement vers le plateau 22. Bien entendu on peut également prévoir des trous.

Les trous peuvent être remplacés par des évidements ouverts affectant les bords de l'insert.

Dans tous les cas, l'insert est doté de déformations, soient débouchantes (les trous, les évidements, les crevés, les pattes), soient non débouchantes (les emboutis), soient les deux à la fois pour un meilleur ancrage dans la masse du plateau de réaction.

Ainsi qu'on l'aura compris les ouvertures 16 permettent d'éviter toute interférence entre les cassettes 10 et le plateau 11.

Ces ouvertures 16 sont donc des ouvertures de dégagement permettant de réduire l'encombrement axial du volant amortisseur.

Ainsi qu'on l'aura compris, dans les figures illustrées, le plateau de réaction 21 porte des pièces 40 (figure 1), 140 (figures 5 et 8) permettant la fixation du couvercle de l'embrayage axialement à distance du plateau de réaction, lesdites pièces ayant une partie s'étendant axialement à cet effet.

Ainsi contrairement à la disposition décrite dans le document US-A-5,120,276 le couvercle de l'embrayage ne présente pas de rebord radial pour sa fixation directe au plateau de réaction.

Ainsi il est possible d'implanter dans un encombrement donné les moyens de frottement selon l'invention à la périphérie externe du plateau de réaction (figure 1) ou d'augmenter la hauteur du plateau de réaction (figures 5 et 8), tout en ayant dans tous les cas une face de friction pour le plateau de réaction de diamètre maximal, ladite face pouvant s'étendre jusqu'à la tranche périphérique externe du plateau de réaction 21.

Bien entendu les pièces 40,140 peuvent présenter à leur extrémité libre un rebord dirigé vers l'axe de l'ensemble ou à l'opposé de l'axe de l'ensemble pour fixation du couvercle pouvant présenter un rebord périphérique de fixation comme dans le document US-A-5,120,276, ledit couvercle étant alors plus plat.

Ce couvercle peut être simplifié et consister en une plaque rapportée par soudage sur les pièces 40,140.

En variante la fixation du couvercle peut être réalisée par sertissage ou agrafage sur l'extrémité libre des pièces 40,140.

Bien entendu à la figure 1 on peut fixer la pièce 40 comme à la figure 5 sur le plateau de réaction 21.

## Revendications

1. Volant amortisseur, notamment pour véhicule automobile, du genre comportant deux masses coaxiales (1,2) montées mobiles l'une par rapport à l'autre à l'encontre de moyens élastiques (8) et de moyens de frottement (50,150) comprenant une rondelle élastique à action axiale (53,153), dans lequel l'une (1) des masses, dite première masse, est destinée à être fixée à un arbre menant, tandis que l'autre (2) masse, dite deuxième masse, comporte un plateau de réaction (21) pour un embrayage à friction, et est montée tournante sur la première masse (1) par l'intermédiaire d'un palier (15), dans lequel la première masse (1) porte à fixation à sa périphérie externe une pièce de rigidification (60) s'étendant à proximité de la seconde masse (2), et dans lequel les moyens de frottement (50, 150),d'une part,sont implantés entre ladite pièce (60) et ladite seconde masse (2) et,d'autre part, interviennent entre l'une des périphéries interne et externe de la pièce de rigidification (60) et le plateau de réaction de le seconde masse (2) ,caractérisé en ce que la pièce de rigidification (60) comporte à l'une de ses périphéries interne et externe un rebord d'orientation axiale présentant à son extrémité libre des pattes rabattues radialement pour implantation de la rondelle élastique à action axiale (53,153).

2. Volant selon la revendication 1, caractérisé en ce que ledit rebord présente des échancrures (61,161) formant des mortaises.

3. Volant selon la revendication 1 ou 2, caractérisé en ce que, entre les pattes (62) et une partie transversale de la pièce de rigidification, sont implantées au moins une rondelle de frottement (51,151) et la rondelle élastique à action axiale (53,153), et en ce que la rondelle de frottement (51,151) est admise à être calée, éventuellement avec jeu, en rotation sur la seconde masse (2), tandis que la rondelle élastique à action axiale (51,151) prend appui directement ou indirectement sur les pattes (62) de la pièce de rigidification pour action sur une rondelle d'application (52,152) dotée de tenons engrenant avec les mortaises (61,161) du rebord axial de la pièce de rigidification (60) en sorte que la rondelle de frottement (51,151) est serrée entra ladite rondelle d'application et ladite partie transversale de la pièce de rigidification (60).

4. Volant selon la revendication 3, caractérisé en ce que la seconde masse présente des moyens d'engrènement pour engrener, éventuellement après rattrapage d'un jeu, avec la rondelle de frottement (51,151).

5. Volant selon la revendication 3 ou 4, caractérisé en ce que les moyens de frottement interviennent entre la périphérie externe de la pièce de rigidification et la périphérie externe du plateau de réaction (21), et en ce que le plateau de réaction (21) porte une pièce d'adaptation (40,140) dotée localement d'emboutis pour engrener, éventuellement avec jeu, avec la périphérie interne de la rondelle de frottement (51) dotée de bossages (63) à cet effet.

6. Volant selon la revendication 5, caractérisé en ce que la pièce d'adaptation (40,140) comporte une partie d'orientation axiale pour fixation du couvercle de l'embrayage axialement à distance du plateau de réaction (21).

7. Volant selon la revendication 3 ou 4, caractérisé en ce que les moyens de frottement interviennent entre la périphérie interne de la pièce de rigidification (60) et une creusure formée à la faveur d'une protubérance (160) s'étendant radialement en-dessous de la face de friction, que présente le plateau de réaction (21) pour les garnitures de frottement d'un disque de friction (23) appartenant à un embrayage à friction.

8. Volant selon la revendication 7, caractérisé en ce que la rondelle de frottement (151) présente à sa périphérie externe des échancrures (157) propres à engrener à jeu avec des pions (156) portés par le plateau de réaction (21).

## Patentansprüche

1. Dämpfungsschwungrad, insbesondere für Kraftfahrzeuge, umfassend zwei koaxiale Massen (1, 2), die im Verhältnis zueinander beweglich entgegen elastischen Mitteln (8) und Reibungsmitteln (50, 150) gelagert sind, die eine axial wirksame Federscheibe (53, 153) umfassen, wobei eine (1) der Massen, die als erste Masse bezeichnet wird, zur Befestigung an einer treibenden Welle bestimmt ist, während die andere (2) Masse, die als zweite Masse bezeichnet wird, eine Gegenanpreßplatte (21) für eine Reibungskupplung umfaßt und über ein Lager (15) drehbar an der ersten Masse (1) gelagert ist, wobei die erste Masse (1) ein an ihrem äußeren Umfang befestigtes Versteifungselement (60) trägt, das sich in der Nähe der zweiten Masse (2) erstreckt, und wobei die Reibungsmittel (50, 150) einerseits zwischen dem Versteifungselement (60) und der besagten zweiten Masse (2) angeordnet sind und andererseits zwischen einem der inneren und äußeren Umfänge des Versteifungselements (60) und der Gegenanpreßplatte der zweiten Masse (2) zum Einsatz kommen, **dadurch gekennzeichnet**, daß das Versteifungselement (60) an einem seiner inneren und äußeren Umfänge eine axial ausgerichtete Randleiste umfaßt, die an ihrem freien Ende radial umgebogene Ansätze für die Anbringung der axial wirksamen Federscheibe (53, 153) aufweist.

2. Schwungrad nach Anspruch 1, **dadurch gekennzeichnet**, daß die besagte Randleiste Aussparungen (61, 161) aufweist, die Zapfenlöcher bilden.

3. Schwungrad nach Anspruch 1 oder 2, **dadurch gekennzeichnet**, daß zwischen den Ansätzen (62) und einem Querteil des Versteifungselements wenigstens eine Reibscheibe (51, 151) und die axial wirksame Federscheibe (53, 153) angeordnet sind und daß die Reibscheibe (51, 151), gegebenenfalls mit Spiel, drehfest an der zweiten Masse (2) angebracht ist, während die axial wirksame Federscheibe (51, 151) direkt oder indirekt auf den Ansätzen (62) des Versteifungsteils zur Auflage kommt, um auf eine Anpreßscheibe (52, 152) mit Zapfen einzuwirken, die mit den Zapfenlöchern (61, 161) der axialen Randleiste des Versteifungselements (60) in Eingriff kommen, so daß die Reibscheibe (51, 151) zwischen der besagten Anpreßscheibe und dem besagten Querteil des Versteifungselements (60) eingespannt ist.

4. Schwungrad nach Anspruch 3, **dadurch gekennzeichnet**, daß die zweite Masse Eingriffsmittel aufweist, um, gegebenenfalls nach Aufhebung eines Spiels, mit der Reibscheibe (51, 151) in Eingriff zu kommen.

5. Schwungrad nach Anspruch 3 oder 4, **dadurch gekennzeichnet**, daß die Reibungsmittel zwischen dem äußeren Umfang des Versteifungselements und dem äußeren Umfang der Gegenanpreßplatte (21) zum Einsatz kommen und daß die Gegenanpreßplatte (21) ein Anpaßelement (40, 140) trägt, das örtlich mit Vertiefungen versehen ist, um, gegebenenfalls mit Spiel, mit dem inneren Umfang der Reibscheibe (51) in Eingriff zu kommen, die dazu mit Vorsprüngen (63) versehen ist.

6. Schwungrad nach Anspruch 5, **dadurch gekennzeichnet**, daß das Anpaßelement (40, 140) einen axial ausgerichteten Teil für die Befestigung des Kupplungsdeckels axial in einem Abstand von der Gegenanpreßplatte (21) umfaßt.

7. Schwungrad nach Anspruch 3 oder 4, **dadurch gekennzeichnet**, daß die Reibungsmittel zwischen dem inneren Umfang des Versteifungselements (60) und einer Einsenkung zum Einsatz kommen, die mittels einer Ausstülpung (160) ausgebildet ist, die sich radial unterhalb der Reibfläche erstreckt, die die Gegenanpreßplatte (21) für die Reibbeläge einer Kupplungsscheibe (23) aufweist, die zu einer Reibungskupplung gehört.

8. Schwungrad nach Anspruch 7, **dadurch gekennzeichnet**, daß die Reibscheibe (151) an ihrem äußeren Umfang Aussparungen (157) aufweist, die mit Spiel mit Stiften (156) in Eingriff kommen können, die an der Gegenanpreßplatte (21) angebracht sind.

## Claims

1. A damped flywheel, especially for a motor vehicle, of the type comprising two coaxial masses (1, 2) which are mounted for motion of one with respect to the other against the action of resilient means (8) and friction means (50, 150) comprising an axially acting resilient ring (53, 153), wherein one (1) of the masses, referred to as a first mass, is adapted to be fixed to a driving shaft while the other mass (2), referred to as a second mass, includes a reaction plate (21) for a friction clutch, and is mounted for rotation on the first mass (1) through a bearing (15), wherein the first mass (1) carries, fixed at its outer periphery, a stiffening member (60) lying close to the second mass (2), and wherein the friction means (50, 150), on the one hand, are fitted between the said member (60) and the said second mass (2), and, on the other hand, act between one of the inner and outer peripheries of the stiffening member (60) and the reaction plate of the second mass (2), characterised in that the stiffening member (60) includes at one of its inner and outer peripheries an axially orientated flange having at its free end lugs which are bent back radially for fitting of the axially acting resilient ring (53, 153).

2. A flywheel according to Claim 1, characterised in that the said flange has notches (61, 161) constituting mortices.

3. A flywheel according to Claim 1 or Claim 2, characterised in that, between the lugs (62) and a transverse portion of the stiffening member, there are fitted at least one friction ring (51, 151) and the axially acting resilient ring (53, 153), and in that the friction ring (51, 151) is arranged to be mounted, optionally with a clearance, in rotation on the second mass (2), while the axially acting resilient ring (51, 151) bears directly or indirectly on the lugs (62) of the stiffening member so as to act on an application ring (52, 152) having tenons which are in mesh with the mortices (61, 161) of the axial flange of the stiffening member (60), so that the friction ring (51, 151) is gripped between the said application ring and the said transverse portion of the stiffening member (60).

4. A flywheel according to Claim 3, characterised in that the second mass has meshing means for meshing, optionally after a clearance has been taken up, with the friction ring (51, 151).

5. A flywheel according to Claim 3 or Claim 4, characterised in that the friction means act between the outer periphery of the stiffening member and the outer periphery of the reaction plate (21), and in that the reaction plate (21) carries an adapter piece (40, 140) which has local press-formed elements for meshing, optionally with a clearance, with the inner periphery of the friction ring (51), which for this purpose is provided with bosses (63).

6. A flywheel according to Claim 5, characterised in that the adapter member (40, 140) has an axially orientated portion for fastening the cover plate of the clutch axially at a distance from the reaction plate (21).

7. A flywheel according to Claim 3 or Claim 4, characterised in that the friction means act between the inner periphery of the stiffening member (60) and a recess formed in a projecting element (160) which lies radially inwards of the friction face with which the reaction plate (21) is formed for the friction liners of a friction disc (23) of a friction clutch.

8. A flywheel according to Claim 7, characterised in that the friction ring (151) has at its outer periphery notches (157) for meshing, with a clearance, with pins (156) carried by the reaction plate (21).
